# FASCICULE DE BREVET EUROPEEN

(11) **EP 3 205 537 B1**
(45) Date de publication et mention de la délivrance du brevet: **16.12.2020**
(21) Numéro de dépôt: 17153972.9
(22) Date de dépôt: 31.01.2017
(51) Int. Cl.: B60S 1/40

(54) **ADAPTATEUR CONSTITUTIF D'UN SYSTÈME D'ESSUYAGE**
BESTANDSADAPTER EINES SCHEIBENWISCHERSYSTEMS
ADAPTER USED IN A WIPING SYSTEM

(30) Priorité: 12.02.2016 FR 1651135
(43) Date de publication de la demande: 16.08.2017
(73) Titulaire: Valeo Systèmes d'Essuyage, 78322 Le Mesnil Saint Denis (FR)
(72) Inventeur: HOUSSAT, Stéphane, 63112 BLANZAT (FR); POTON, Eric, 63430 Pont du Château (FR); GAUCHER, Vincent, 63720 ENNEZAT (FR)
(74) Mandataire: Valeo Vision

(56) Documents cités:
- EP-A1- 2 781 416
- WO-A1-2014/027217
- DE-A1- 10 347 637
- US-A1- 2013 152 323

## Description

La présente invention se rapporte aux systèmes d'essuyage pour véhicules automobiles, et concerne plus particulièrement un ensemble formé d'un connecteur et d'un adaptateur d'un système d'essuyage.

Un système d'essuyage, couramment dénommé essuie-glaces, pour véhicule automobile est conçu pour retirer, par balayage, les liquides et salissures qui peuvent perturber la vision qu'un conducteur du véhicule automobile a de son environnement. Ces essuie-glaces comprennent généralement un bras d'entraînement qui effectue un mouvement de va-et-vient angulaire autour d'un axe de rotation, et un balai d'essuyage allongé équipé d'une lame racleuse réalisée en un matériau élastique. En frottant contre une surface vitrée, avant ou arrière, du véhicule automobile, la lame racleuse en balaie l'eau et un certain nombre de salissures, et les évacue en dehors du champ de vision du conducteur.

Quelle que soit la configuration du balai d'essuyage, c'est-à-dire soit un balai d'essuyage comportant des étriers articulés qui retiennent la lame racleuse en plusieurs zones distinctes, soit un balai d'essuyage comportant une lame métallique qui maintient la lame racleuse sur toute sa longueur, le balai d'essuyage est rattaché à une partie terminale du bras d'entraînement par l'intermédiaire d'un dispositif de connexion qui comprend un connecteur monté solidaire du balai d'essuyage.

Dans un premier mode de liaison connu, un adaptateur, apte à être assemblé avec le connecteur du balai d'essuyage, est monté mobile en basculement autour d'un axe de fixation sur la partie terminale du bras d'entraînement. Ce premier mode de liaison est couramment utilisé pour les essuie-glaces destinés aux surfaces vitrées situées à l'avant du véhicule automobile. Dans un deuxième mode de liaison connu, le connecteur est raccordé à un arbre solidaire du bras d'entraînement. Ce deuxième mode de liaison est couramment rencontré dans les essuie-glaces destinés aux surfaces vitrées situées à l'arrière du véhicule automobile.

Un problème général posé dans le domaine réside dans le fait que les parties terminales sont susceptibles d'être de formes variées. Il en découle un souhait de disposer d'un adaptateur dont l'agencement permet une fixation de l'adaptateur à des parties terminales de forme respective diverse. En effet, pour faciliter des opérations de référencement et de stockage, ainsi que pour diminuer des coûts de fabrication et de maintenance du système d'essuyage, il est souhaitable de disposer d'un même adaptateur apte à réaliser une interface de montage compatible avec d'une part le connecteur et d'autre part diverses formes de parties terminales de bras d'entraînement. Il en résulte une nécessité de disposer d'un adaptateur comprenant une pluralité de moyens de fixation sur diverses formes de partie terminale de bras d'entraînement, ces moyens de fixation étant simples, compactes et néanmoins robustes, et n'altérant pas un organe de fixation de l'adaptateur sur le connecteur porteur du balai d'essuyage.

Par ailleurs, un problème particulier réside dans le fait que le dispositif de connexion est susceptible d'être soumis à des efforts selon un axe vertical, c'est-à-dire un axe orthogonal à un axe longitudinal d'extension du balai d'essuyage et orthogonal à l'axe de fixation du connecteur sur l'adaptateur, de tels efforts entraînant des contraintes sur l'adaptateur et/ou le connecteur pouvant entraîner une détérioration de l'un et/ou de l'autre.

L'état de la technique est formé entre autre par le document US2013/0007977 qui décrit un dispositif de fixation comprenant le connecteur porteur du balai d'essuyage, et l'adaptateur de raccordement du connecteur au bras d'entraînement. L'adaptateur est prévu pour être interposé entre le connecteur et la partie terminale du bras d'entraînement qui peut présenter diverses configurations. Selon un mode de réalisation, l'adaptateur comprend un unique élément de base qui comporte un plot flexible destiné à être logé à l'intérieur d'une fenêtre ménagée à travers la partie terminale. La partie terminale comporte quant à elle des crochets latéraux qui sont prévus pour venir se loger à l'intérieur de rainures que comporte l'élément de base. Selon un autre mode réalisation, l'adaptateur comprend en outre une pièce intermédiaire prévue pour être rapportée entre l'élément de base et la partie intermédiaire. L'élément intermédiaire est conformé en « U » et comporte une paroi supérieure bordée de deux parois latérales, la paroi supérieure comportant une rainure pour loger une languette de la partie terminale, les parois latérales comportant des orifices ménagés en vis-à-vis l'un de l'autre pour recevoir un arbre que comporte la partie terminale.

Un tel adaptateur s'avère complexe et comporte un nombre d'éléments qu'il est souhaitable de réduire, tout en permettant une liaison entre le connecteur et la partie terminale qui est susceptible d'être variée.

De plus, un tel adaptateur est susceptible d'être soumis à des efforts selon l'axe vertical et ne présente aucune disposition pour éviter une détérioration de l'adaptateur et/ou du connecteur causée par de tels efforts.

Enfin, il est souhaitable de pouvoir déterminer un angle de basculement maximum du connecteur autour de l'axe de fixation de l'adaptateur.

On connait aussi de WO 2014/027217 A1 le préambule de la revendication 1.

Un but de la présente invention est de proposer un dispositif de fixation qui répond au problème général et au problème et souhait particuliers susvisés.

Un adaptateur de la présente invention est destiné à être interposé entre un connecteur et une partie terminale d'un bras d'entraînement, l'adaptateur comprenant un premier organe de fixation apte à coopérer avec un deuxième organe de fixation du connecteur, le premier organe de fixation comprenant au moins une paroi de fixation ménagée selon un plan longitudinal de l'adaptateur et qui est porteuse d'un arbre de pivotement du connecteur, la paroi de fixation comprenant au moins un évidement apte à loger une nervure de rigidification du connecteur.

L'adaptateur comprend avantageusement l'une quelconque des caractéristiques suivantes, prise seule ou en combinaison :
- l'évidement est apte à recevoir une extrémité supérieure qui délimite la nervure de rigidification,
- la paroi de fixation comprend deux évidements ménagés de part et d'autre de l'arbre de pivotement. Dans l'hypothèse où l'adaptateur comprend deux parois de fixation, il est prévu deux évidements par paroi,

- les évidements bordent l'arbre de pivotement. On comprend ici que les évidements sont directement au contact de l'arbre de pivotement,
- l'arbre de pivotement est formé par au moins deux torons respectivement ménagés sur deux parois de fixation de l'adaptateur. Ces torons sont avantageusement de section circulaire,
- l'adaptateur peut comprendre une tête avec une paroi frontale pourvue d'une échancrure frontale, cette échancrure autorisant le passage d'un déflecteur d'air qui équipe le balai d'essuyage,
- l'adaptateur comprend un pied qui est pourvu d'au moins une languette flexible munie d'un plot. Cette languette et ce plot forme ensemble un bouton escamotable. Le pied est par exemple une extrémité longitudinale du corps formant l'adaptateur,
- la languette flexible est équipée d'au moins un contrefort qui s'étend au moins entre la languette flexible et le pied de l'adaptateur,
- le contrefort présente une section longitudinale triangulaire,
- l'adaptateur comprend au moins une languette latérale susceptible de basculer autour d'un axe de bascule qui est perpendiculaire à un axe longitudinal de l'adaptateur.

L'invention vise aussi à couvrir l'association d'un balai d'essuyage et d'un adaptateur tel que décrit dans le présent document. On comprend par cela que l'adaptateur n'est pas nécessairement relié physiquement au balai d'essuyage pour constituer l'invention. On vise ici le cas des produits commercialisés dans le réseau automobile de l'après-vente et constitués d'un conditionnement dans lequel est placé un balai d'essuyage et au moins un adaptateur selon l'invention, et notamment une pluralité d'adaptateurs dont au moins un est celui décrit dans le présent document.

La présente invention a pour objet un ensemble formé d'un connecteur et d'un tel adaptateur, dans lequel l'évidement forme une butée de réception d'une nervure de rigidification que comprend le connecteur, notamment d'une extrémité supérieure de cette nervure.

L'évidement et l'extrémité supérieure de la nervure de rigidification forment selon l'invention un moyen de détermination d'un angle de basculement du connecteur vis-à-vis de l'adaptateur, autour d'un axe de pivotement dans lequel s'étend l'arbre de pivotement.

La présente invention a aussi pour objet un système d'essuyage comprenant un ensemble tel qu'évoqué ci-dessus, comprenant un balai d'essuyage sur lequel est attaché fixement le connecteur et une extrémité terminale d'un bras d'entraînement dans laquelle est rapporté l'adaptateur.

L'ensemble de ces dispositions est tel que l'adaptateur est simple et réduit à une unique pièce, qui permet une liaison robuste entre le connecteur et la partie terminale qui est susceptible d'être variée. Un tel adaptateur est de plus agencé pour résister à des efforts exercés selon un axe vertical sur le système d'essuyage. Enfin, un tel adaptateur est agencé pour déterminer un angle de basculement maximum du connecteur autour de l'axe de fixation de l'adaptateur.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'un système d'essuyage selon l'invention,
- la figure 2 est une vue en perspective de côté d'un adaptateur de la présente invention constitutif du système d'essuyage illustré sur la figure 1,
- la figure 3 est une autre vue en perspective de côté de l'adaptateur illustré sur la figure 2,
- la figure 4 est une vue en perspective de dessous de l'adaptateur illustré sur les figures 2 et 3,
- la figure 5 est une vue en perspective de l'adaptateur représenté sur les figures 2 à 4 équipé d'un connecteur porteur d'un balai d'essuyage, l'adaptateur étant en cours d'assemblage avec une partie terminale d'un bras d'entraînement d'un premier type,
- la figure 6 est une vue en perspective de l'adaptateur représenté sur les figures 2 à 4 équipé d'un connecteur porteur d'un balai d'essuyage, l'adaptateur étant en cours d'assemblage avec une partie terminale d'un bras d'entraînement d'un deuxième type,
- la figure 7 est une vue en perspective de dessus d'un connecteur constitutif du système d'essuyage illustré sur la figure 1,
- la figure 8 est une vue en coupe longitudinale du connecteur illustré sur la figure 7 équipé de l'adaptateur tel qu'illustré sur les figures 5 et 6, la figure 8 illustrant également un détail du montage du connecteur et de l'adaptateur.

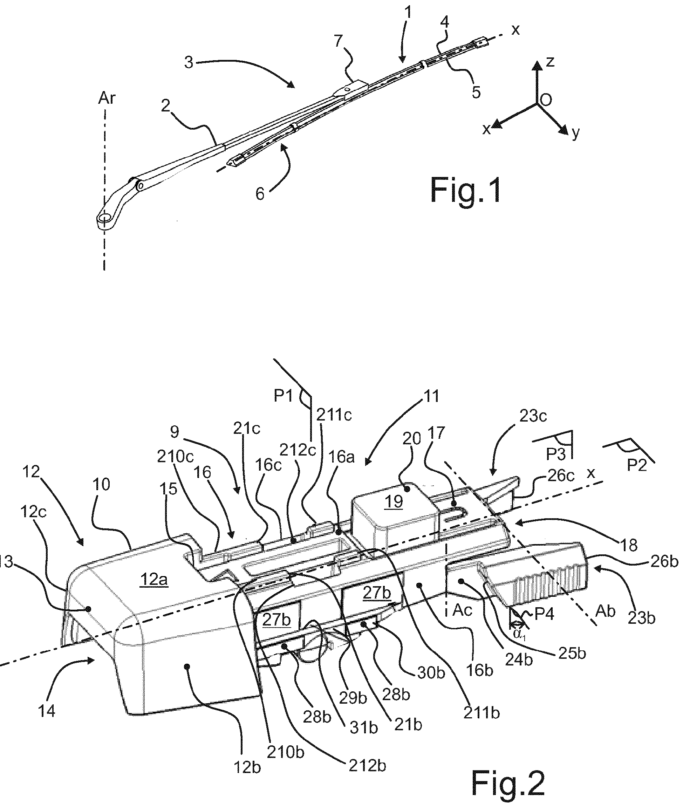

Sur les figures, les dénominations longitudinale, latérale, transversale, verticale, dessus, dessous, se réfèrent à l'orientation d'un balai d'essuyage 1 illustré sur la figure 1. Une direction longitudinale correspond à un axe longitudinal X selon lequel le balai d'essuyage 1 s'étend et/ou selon lequel s'étend l'adaptateur de la présente invention. Une direction transversale correspond à celle d'un axe transversal Y qui est perpendiculaire à l'axe longitudinal X et à un axe de rotation Ar d'un bras d'entraînement 2 constitutif d'un système d'essuyage 3. Une direction verticale, parallèle à celle d'un axe vertical Z, et les dénominations supérieure ou inférieure se rapportent à des orientations parallèles à l'axe de rotation Aᵣ du bras d'entraînement 2 du système d'essuyage 3, la dénomination inférieure contenant le plan du pare-brise. Pour les directions longitudinales, les dénominations extérieure ou intérieure s'apprécient par rapport à un point de pivotement du balai d'essuyage 1 sur le bras d'entraînement 2 du balai d'essuyage 1, la dénomination intérieure correspondant à la partie où le bras d'entraînement 2 et un demi-balai s'étendent, la dénomination extérieure correspondant à la partie où l'autre demi-balai s'étend.

Les directions évoquées ci-dessus sont illustrées dans un repère orthonormé Oxyz représenté sur les figures. Dans ce repère, l'axe Ox représente la direction longitudinale, l'axe Oy représente la direction transversale, et l'axe Oz représente la direction verticale.

Sur la figure 1, un véhicule automobile est couramment équipé du système d'essuyage 3 pour évacuer une eau et/ou des salissures présentes sur une surface vitrée, notamment une lunette arrière du véhicule automobile. Le système d'essuyage 3 comprend le bras d'entraînement 2 qui est apte à effectuer un mouvement de va-et-vient angulaire le long et au-dessus de la surface vitrée. La surface vitrée est indifféremment un pare-brise avant ou une lunette arrière équipant le véhicule automobile.

Le système d'essuyage 3 comprend aussi le balai d'essuyage 1 qui s'étend selon un axe principal, dit axe longitudinal X parallèle à l'axe Ox. Le balai d'essuyage 1 comprend au moins un déflecteur d'air 4 et une lame racleuse 5. Le déflecteur d'air 4 est prévu pour transformer une pression appliquée par un flux d'air circulant le long de la surface vitrée en une force d'appui du balai d'essuyage 1 contre la surface vitrée du véhicule automobile. La lame racleuse 5 est la pièce du balai d'essuyage 1 en contact direct avec la surface vitrée pour évacuer l'eau et/ou les salissures présentes sur ce dernier. Le déflecteur d'air 4 et la lame racleuse 5 forment un ensemble semi-rigide 6 qui est porté par un dispositif de connexion 7, interposé entre le bras d'entraînement 2 et l'ensemble semi-rigide 6.

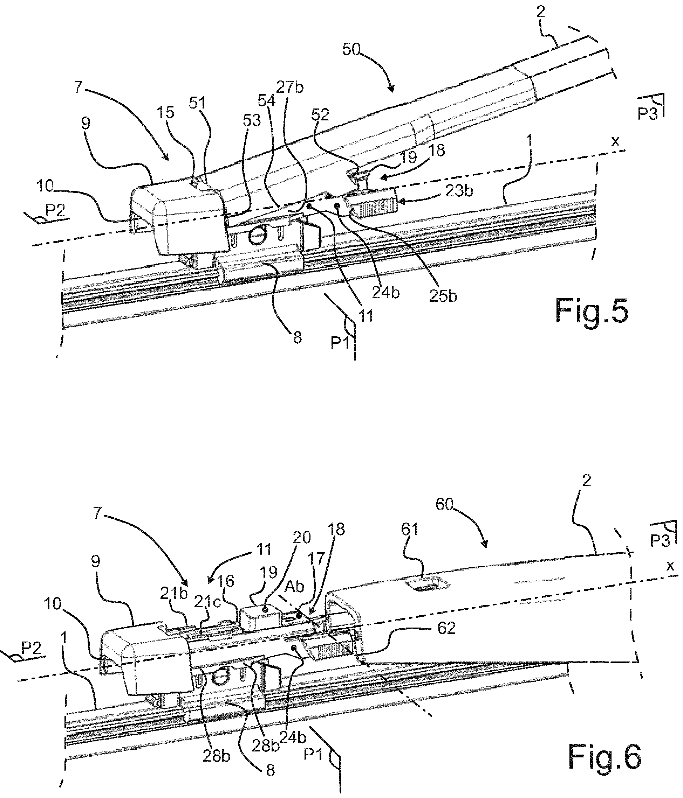

Le dispositif de connexion 7 assure une liaison mécanique entre le bras d'entraînement 2 et le balai d'essuyage 1 et permet ainsi de séparer le balai d'essuyage 1 du bras d'entraînement 2, en vue d'un remplacement du balai d'essuyage 1. Dans sa généralité, le dispositif de connexion 7 de la présente invention comprend en tout et pour tout deux pièces, dont un connecteur 8 et un adaptateur 9, visibles ensemble sur les figures 5, 6 et 9. Le connecteur 8 est apte à porter le balai d'essuyage 1 et est monté en rotation sur l'adaptateur 9 qui est à même d'être fixé à une partie terminale 50, 60 du bras d'entraînement 2. Le connecteur 8 s'étend longitudinalement selon l'axe longitudinal X parallèle à l'axe Ox, c'est-à-dire de manière parallèle à l'axe longitudinal du balai d'essuyage 1. Selon un autre mode de réalisation, la partie terminale 50, 60 est réalisée par pliage d'un feuillard métallique, tel qu'une tôle en aluminium ou analogue. Selon un autre mode de réalisation, la partie terminale 50, 60 est réalisée par moulage d'une matière synthétique.

Selon un mode de réalisation de l'invention, le connecteur 8 et l'adaptateur 9 sont réalisés par moulage d'un matériau polymère, par exemple un matériau de la famille des Polyoxyméthylènes, connue sous l'acronyme POM, ou par moulage d'un mélange de matériaux polymères, par exemple un mélange de polymères de la famille des polycarbonates et de la famille des Acrylonitrile Butadiène Styrène, connue sous l'acronyme ABS. Ainsi, le connecteur 8 d'une part et l'adaptateur 9 d'autre part sont chacun d'un seul tenant.

Sur les figures 2 à 4, l'adaptateur 9 est étendu selon l'axe longitudinal X et comporte une tête 10 prolongée d'un corps 11, qui sont aboutés l'un à l'autre selon l'axe longitudinal X.

La tête 10 comprend une paroi de tête 12 qui présente un profil en « U » selon une coupe ménagée dans un plan parallèle à un plan transversal P₁, c'est-à-dire perpendiculairement à l'axe longitudinal de l'adaptateur. La paroi de tête 12 comprend une portion de tête supérieure 12a et deux portions de tête latérales 12b, 12c. La portion de tête supérieure 12a est étendue selon un plan parallèle à un plan longitudinal horizontal P₂ tandis que les portions de tête latérales 12b, 12c sont parallèles l'une à l'autre et étendues dans un plan respectif parallèle à un plan longitudinal vertical P₃. Le plan transversal P₁ est parallèle au plan Oyz, le plan longitudinal horizontal P₂ est parallèle au plan Oxy et le plan longitudinal vertical P₃ est parallèle au plan Oxz. La tête 10 comprend aussi une paroi frontale 13 qui est sensiblement ménagée dans un plan parallèle au plan transversal P₁ et qui relie entre elles la portion de tête supérieure 12a et les portions de tête latérales 12b, 12c. La paroi frontale 13 comprend une échancrure frontale 14 pour permettre un passage du balai d'essuyage 1, lors d'un mouvement en rotation du connecteur 8 par rapport à l'adaptateur 9. La portion de tête supérieure 12a comporte quant à elle une échancrure arrière 15 qui permet le passage d'une protubérance avant 51 de la partie terminale 50 du premier type illustrée sur la figure 5.

Le corps 11 comprend une paroi de corps 16 qui présente un profil en « U » selon une coupe ménagée dans un plan parallèle au plan transversal P₁. La paroi de corps 16 comprend une portion de corps supérieure 16a et deux portions de corps latérales 16b, 16c. La portion de corps supérieure 16a est étendue selon un plan parallèle au plan longitudinal horizontal P₂ tandis que les portions de corps latérales 16b, 16c sont parallèles l'une à l'autre et étendues dans un plan respectif parallèle au plan longitudinal vertical P₃.

La portion de corps supérieure 16a est pourvue d'une languette flexible 17 qui est montée mobile en basculement sur la portion de corps supérieure 16a autour d'un axe de basculement Ab. De préférence, l'axe de basculement Ab est ménagé sur un pied 18 du corps 11 qui est ménagé longitudinalement à l'opposé de la tête 13 de l'adaptateur 9. La languette flexible 17 est équipée d'un plot 19 qui émerge au-dessus de la portion de corps supérieure 16a. Le plot 19 est mobile en rotation autour de l'axe de basculement Ab selon une faible course de telle sorte qu'en début de course le plot 19 est sensiblement mobile en translation à l'intérieur du plan transversal P₁ et du plan longitudinal vertical P₃. Le plot 19 comporte une face d'appui 20 qui est ménagée parallèlement au plan longitudinal horizontal P₂, la face d'appui 20 étant destinée à émerger à travers et au-dessus d'une fenêtre 61 équipant la partie terminale 60 du deuxième type illustrée sur la figure 6. Le plot 19 et sa languette flexible forme un bouton escamotable dont la fonction est d'assurer la retenue de l'adaptateur 9 dans un type de bras particulier.

La portion de corps supérieure 16a est pourvue d'au moins deux rampes de guidage longitudinales 21b, 21c qui sont par exemple ménagées le long d'un bord longitudinal respectif 22b, 22c de la portion de corps supérieure 16a. Les rampes de guidage longitudinales 21b, 21c sont parallèles l'une à l'autre et étendues selon l'axe longitudinal X. Chaque rampe de guidage longitudinale 21b, 21c est par exemple conformée en une nervure qui émerge au-dessus de la portion de corps supérieure 16a. Les rampes de guidage longitudinales 21b, 21c sont prévues pour guider un mouvement en translation le long de l'axe longitudinal X la partie terminale 50, 60 du bras d'entraînement 2. Les rampes de guidage longitudinales 21b, 21c sont chacune susceptibles d'être formées d'une pluralité de rampes de guidage longitudinales élémentaires 210b, 211b, 210c, 211c discontinues selon l'axe longitudinal X et alignées dans cet axe longitudinal X. Des premières rampes de guidage longitudinales élémentaires 211b, 211c sont ménagées à proximité du plot 19 tandis que des deuxièmes rampes de guidage longitudinales élémentaires 210b, 210c sont ménagées à proximité de la tête 10. Les premières rampes de guidage longitudinales élémentaires 210b, 210c sont respectivement séparées des deuxièmes rampes de guidage longitudinales élémentaires 211b, 211c par un premier orifice 212b et un deuxième orifice 212c qui sont ménagés à travers la portion de corps supérieure 16a.

Chaque portion de corps latérale 16b, 16c est pourvue d'une aile ou languette latérale 23b, 23c qui est montée sur la portion de corps latérale 16b, 16c respective et qui est susceptible de basculer autour d'un axe de bascule Ac. L'axe de bascule Ac est perpendiculaire à l'axe de basculement Ab et à l'axe longitudinal X. Chaque aile latérale 23b, 23c comprend un montant latéral 24b, 24c respectif qui est articulé sur la portion de corps latérale 16b, 16c. Les montants latéraux 24b, 24c sont étendus dans un plan parallèle au plan longitudinal vertical P₃. Chaque montant latéral 24b, 24c est porteur d'un montant transversal 25b, 25c respectif qui est étendu dans un plan de coulissement P₄ orthogonal au plan longitudinal vertical P₃ et formant avec l'axe de bascule Ac un premier angle α₁ qui est de l'ordre de 45° à +/-10% près, tel qu'illustré sur la figure 2.

Chaque montant transversal 25b, 25c forme une rampe de glissement pour des butées transversales 52 respectives que comporte la partie terminale 50 du premier type illustrée sur la figure 5. Chaque montant transversal 25b, 25c est pourvu d'une patte longitudinale 26b, 26c respective qui est étendue dans un plan parallèle au plan longitudinal vertical P₃. Les pattes longitudinales 26b, 26c forment un organe de blocage longitudinal de l'adaptateur dans un premier type de bras d'essuie-glace.

Les pattes longitudinales 26b, 26c porte un organe de préhension de l'adaptateur 9 pour un désengagement de butées transversales 52 du bras, tel qu'il sera décrit plus loin. A cet effet, les pattes longitudinales 26b, 26c sont par exemple pourvues de reliefs de préhension, tels que des stries ou analogues, qui sont ménagées sur une face externe des pattes longitudinales 26b, 26c.

Chaque portion de corps latérale 16b, 16c comprend au moins une première surface de guidage 27b, 27c d'un bord latéral 53 respectif que comporte la partie terminale 50 du premier type illustrée sur la figure 5. De préférence, chaque portion de corps latérale 16b, 16c comporte une pluralité de premières surfaces de guidage 27b, 27c qui sont alignées les unes avec les autres selon l'axe longitudinal X. De plus, chaque portion de corps latérale 16b, 16c comprend au moins une deuxième surface de guidage 28b, 28c d'une bordure latérale 62 respective que comporte la partie terminale 60 du deuxième type illustrée sur la figure 6. De préférence, chaque portion de corps latérale 16b, 16c comporte une pluralité de deuxièmes surfaces de guidage 28b, 28c qui sont alignées les unes avec les autres selon l'axe longitudinal X. Selon une forme de réalisation, les premières surfaces de guidage 27b, 27c et les deuxièmes surfaces de guidage 28b, 28c sont superposées les unes aux autres et s'étendent dans des plans distincts mais parallèles, notamment parallèle au plan longitudinal vertical P₃.

De préférence encore, les premières surfaces de guidage 27b, 27c et les deuxièmes surfaces de guidage 28b, 28c sont polies pour faciliter un coulissement de la partie terminale 50, 60. Selon une variante de réalisation, les deuxièmes surfaces de guidage 28b, 28c sont ménagées sur une face longitudinale externe 29b, 29c respective d'une rainure longitudinale 30b, 30c que comprend chaque portion de corps latérale 16b, 16c. Chaque rainure longitudinale 30b, 30c comprend une face longitudinale horizontale 31b, 31c qui est ménagée dans un plan parallèle au plan longitudinal horizontal P₂. Avantageusement, chaque face longitudinale horizontale 31b, 31c forme une surface de guidage à une bordure longitudinale 54 que comporte la partie terminale 50 du premier type illustrée sur la figure 5.

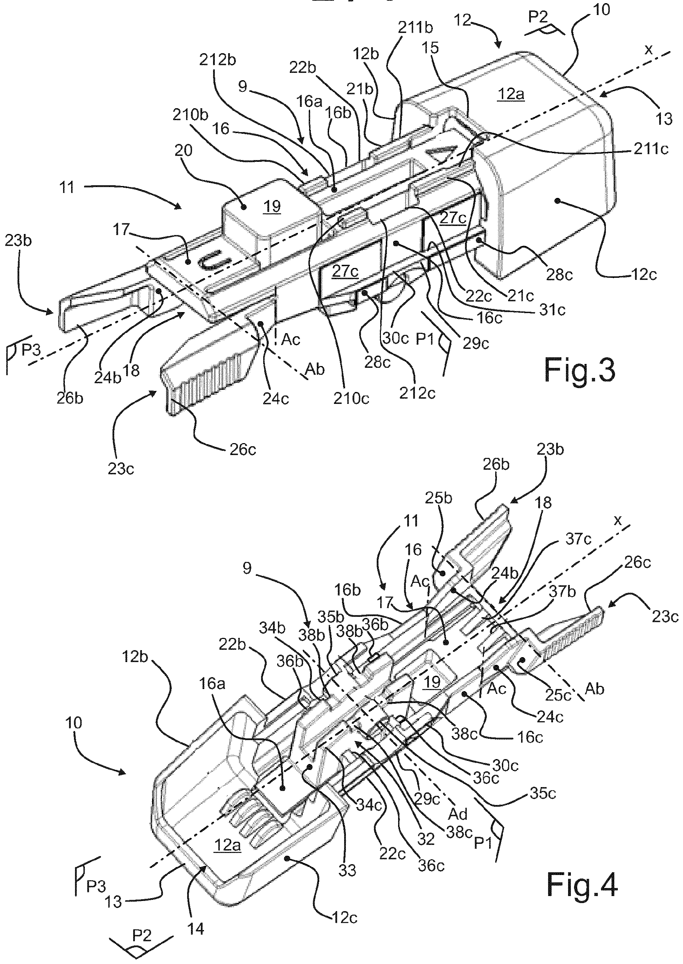

En se reportant sur la figure 4, la portion de corps supérieure 16a comprend un premier organe de fixation 32 du connecteur 8. Le premier organe de fixation 32 est prévu pour assurer une liaison mécanique entre l'adaptateur 9 et le connecteur 8. Le premier organe de fixation 32 est porté par une face interne de la portion de corps supérieure 16a de telle sorte que le premier organe de fixation 32 est interposé entre les portions de corps latérales 16b, 16c. Le premier organe de fixation 32 comprend une embase 33 qui est portée par la face interne de la portion de corps supérieure 16a. L'embase 33 est elle-même porteuse de deux parois de fixation 34b, 34c qui sont parallèles entre elles et parallèles au plan longitudinal vertical P₃. Chaque paroi de fixation 34b, 34c est pourvu d'un toron 35b, 35c respectif. Les torons 35b, 35c s'étendent le long d'un axe Ad, appelé arbre de pivotement Ad de l'adaptateur 9 sur le connecteur 8. L'arbre de pivotement Ad est notamment parallèle à l'axe de basculement Ab et orthogonal au plan longitudinal vertical P₃. De manière avantageuse, au moins une platine de renfort 36b, 36c est interposée entre respectivement la portion de corps latérale 16b, 16c et la paroi de fixation 34b, 34c pour consolider l'adaptateur 9. De préférence, et comme illustré, deux platines de renfort 36b, 36c sont interposées entre respectivement la portion de corps latérale 16b, 16c et la paroi de fixation 34b, 34c. Dans ce cas-là, les platines de renfort 36b, 36c sont par exemple disposées de part et d'autre de l'arbre de pivotement Ad.

La languette flexible 17 est préférentiellement pourvue d'au moins un contrefort 37b, 37c qui s'étend entre la languette flexible 17 et le pied 18 de l'adaptateur 9 pour rigidifier la languette flexible 17. Les contreforts 37b, 37c sont préférentiellement au nombre de deux, tel qu'illustré. Les contreforts 37b, 37c présentent par exemple un profil triangulaire selon une coupe effectuée selon un plan parallèle au plan longitudinal vertical P₃.

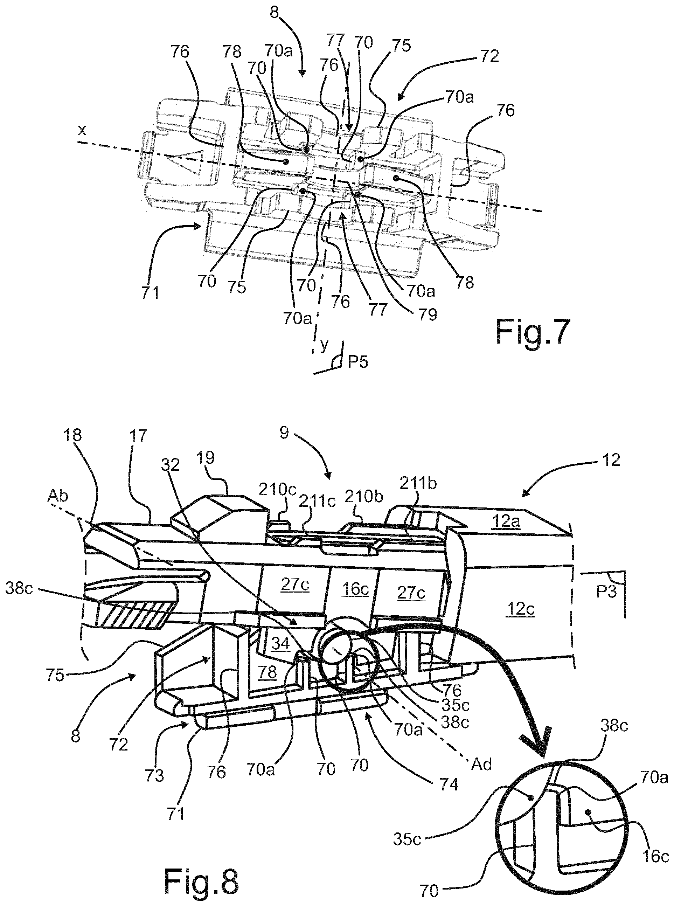

Au moins un évidement 38b, 38c est ménagé à l'intérieur de l'une des parois de fixation 34b, 34c pour recevoir une extrémité supérieure 70a correspondante de nervures de rigidification 70 que comprend le connecteur 8, tel qu'illustré sur la figure 8 et plus particulièrement sur le zoom que comprend cette figure. Les évidements 38b, 38c sont par exemple en pluralité et sont ménagés dans chacune des parois de fixation 34b, 34c. Plus particulièrement encore, les évidements 38b, 38c sont en pluralité et sont ménagés de part et d'autre de l'arbre de pivotement Ad. Autrement dit, dans ce cas-là chaque toron 35b, 35c, est bordé d'un couple d'évidements 38b, 38c.

Ces dispositions sont telles qu'un angle de basculement du connecteur 8 sur l'adaptateur 9 est fonction d'une longueur des évidements 38b, 38c prise selon l'axe longitudinal X entre le toron 35b, 35c et une extrémité longitudinale des évidements 38b, 38c ainsi que d'un écartement longitudinal des nervures de rigidification 70 entre elles. Alternativement ou de manière complémentaire, une profondeur des évidements 38b, 38c, mesurée selon l'axe vertical OZ, détermine l'angle de basculement entre le connecteur 8 et l'adaptateur 9. Ces dispositions sont également telles que les évidements 38b, 38c constituent des butées de réception des extrémités supérieures 70a des nervures de rigidification 70 lorsqu'un effort est appliqué sur le système d'essuyage selon l'axe vertical Z. De telles butées diminuent des contraintes susceptibles d'affecter les torons 35b, 35c de l'adaptateur 9 et/ou le connecteur 8.

En se reportant maintenant sur la figure 7, le connecteur 8 est étendu le long de l'axe longitudinal X du balai d'essuyage 1. Le connecteur 8 comprend une base 71, qui s'étend selon les directions longitudinale et transversale, et un deuxième organe de fixation 72 qui s'étend, au-dessus de la base 71, sensiblement selon la direction verticale. Le deuxième organe de fixation 72 du connecteur 8 est prévu pour collaborer avec le premier organe de fixation 32 de l'adaptateur 9 pour assurer une liaison mécanique robuste et fiable entre le connecteur 8 et l'adaptateur 9.

La base 71 comporte des moyens de solidarisation du connecteur 8 au balai d'essuyage 1. Ces moyens de solidarisation prennent la forme de gorges 73 ménagées dans les parties latérales inférieures de la base 71, dont chacune délimite, en partie inférieure latérale de la base 71, un crochet 74 apte à venir en prise sur le balai d'essuyage 1.

Le deuxième organe de fixation 72, avantageusement issu de matière avec la base 71, s'étend au-dessus de cette dernière selon la direction verticale. Le deuxième organe de fixation 72 comprend des flancs latéraux 75, sensiblement verticaux. Chacun de ces flancs latéraux 75 est sensiblement plan, de faible épaisseur selon la direction transversale. Les flancs latéraux 75 délimitent ainsi, entre eux, un volume intérieur du connecteur 8. Vers les extrémités longitudinales du deuxième organe de fixation 72, les flancs latéraux 75 sont reliés entre eux par au moins une, et préférentiellement au moins un couple de nervures de consolidation 76, qui jouent notamment un rôle de renfort du deuxième organe de fixation 72.

A travers chacun des flancs latéraux 75 est ménagé un palier de réception 76 respectif des torons 35b, 35c de l'adaptateur 9. Chacun des paliers de réception 76 a une forme sensiblement cylindrique et est traversant, c'est-à-dire qu'il s'étend transversalement sur toute l'épaisseur de chacun des flancs latéraux 75. Le diamètre intérieur de chacun des paliers de réception 76 est défini par rapport à un diamètre moyen des torons 35b, 35c de l'adaptateur 9 auquel le connecteur 8 est destiné à être connecté. Les centres des deux paliers de réception 76 agencés dans les flancs latéraux 75 sont alignés selon l'axe transversal Y parallèle à la direction de l'axe Oy du repère orthonormé défini plus haut. L'axe transversal Y matérialise l'axe de rotation du balai d'essuyage 1 par rapport au bras d'entraînement 2, une fois que les torons 35b, 35c sont accueillis à l'intérieur des paliers de réception 76 du connecteur 8.

Chacun des paliers de réception 76 est placé sensiblement, selon la direction longitudinale, dans la zone centrale du flanc latéral 75 correspondant. Selon le mode de réalisation illustré sur les figures 7 et 8, l'axe transversal Y selon lequel les centres de ces paliers de réception 76 sont alignés est donc compris à l'intérieur d'un plan de symétrie transversal P₅ du connecteur 8. Selon la direction verticale, chacun des paliers de réception 76 s'étend avantageusement sensiblement en zone centrale du deuxième organe de fixation 72 du connecteur 8. Chacun de ces paliers de réception 76 est donc agencé, sur l'un ou l'autre des flancs latéraux 75, de telle manière que, d'une part, il subsiste de la matière du flanc latéral 75 correspondant au-dessus du palier de réception 76, et de telle manière que, d'autre part, il subsiste de la matière du flanc latéral 75 correspondant au-dessous dudit palier de réception 76, entre son point le plus bas et la face supérieure de la base 9 du connecteur 8.

Pour permettre l'accueil et le maintien des torons 35b, 35c de l'adaptateur 9 dans le connecteur 8, c'est-à-dire, par exemple simultanément dans les paliers de réception 76, agencés dans les flanc latéraux 75, une ouverture d'entrée 77 est ménagée au droit de chacun de ces paliers de réception 76, au-dessus de ces derniers. La dimension longitudinale de chacune des ouvertures d'entrée 77 est inférieure au diamètre intérieur du palier de réception 76 auquel l'ouverture d'entrée 77 donne accès, et dans lequel l'ouverture d'entrée 77 débouche. En d'autres termes, chaque ouverture d'entrée 77 forme un cône d'accès au palier de réception 76 correspondant. Ainsi, lorsque les torons 35b, 35c de l'adaptateur 9 sont accueillis simultanément dans les paliers de réception 76, les torons 35b, 35c y sont ensuite maintenus selon la direction verticale Z.

Le deuxième organe de fixation 72 du connecteur 8 comporte en outre, au sein du volume intérieur délimité par les flancs latéraux 75, une joue de guidage 78 qui s'étend sensiblement longitudinalement et verticalement, à partir de la face supérieure de la base 71. Selon le mode de réalisation illustré par les figures, la joue de guidage 78 est placée, selon la direction transversale, sensiblement en partie médiane du volume intérieur délimité par les deux flancs latéraux 75. La joue de guidage 78 est également avantageusement placée en situation sensiblement centrale selon la direction longitudinale du connecteur 8.

Sensiblement en partie centrale selon la direction longitudinale, une encoche de guidage 79 est ménagée en partie supérieure de la joue de guidage 78. Cette encoche de guidage 79 débouche à la surface supérieure de la joue de guidage 78. Plus précisément, l'encoche de guidage 79 est agencée de telle manière qu'elle forme, en sa partie inférieure, sensiblement un demi-cylindre centré sur l'axe transversal Y, et dont le diamètre est supérieur à celui desdits paliers de réception 76. Selon le mode de réalisation illustré, cette partie demi-cylindrique se prolonge verticalement, vers la surface supérieure de la joue de guidage 78, sur une dimension longitudinale sensiblement égale à son diamètre. Selon d'autres modes de réalisation alternatifs, l'encoche de guidage 79 peut présenter, en direction de la surface supérieure de la joue de guidage 78, un léger évasement.

Les nervures de rigidification 70, décrites plus haut, sont ménagées entre la joue de guidage 78 et les flancs latéraux 75 pour consolider le deuxième organe de fixation 72. Les nervures de rigidification 70 sont étendues à l'intérieur de plans respectifs qui sont parallèles au plan de symétrie transversal P₅.

## Revendications

1. Ensemble (8, 9) formé d'un connecteur (8) et d'un adaptateur (9) destiné à être interposé entre ledit connecteur (8) et une partie terminale (50, 60) d'un bras d'entraînement (2) d'un système d'essuyage (3), l'adaptateur (9) comprenant un premier organe de fixation (32) apte à coopérer avec un deuxième organe de fixation (72) du connecteur (8), le premier organe de fixation (32) comprenant au moins une paroi de fixation (34b, 34c) ménagée selon un plan longitudinal (P3) de l'adaptateur (9) et qui est porteuse d'un arbre de pivotement (Ad) du connecteur (8), la paroi de fixation (34b, 34c) comprenant au moins un évidement (38b, 38c) apte à loger une nervure de rigidification (70) du connecteur (8), l'évidemment (38b, 38c) formant une butée de réception de ladite nervure de rigidification (70), l'ensemble (8,9) étant **caractérisé en ce que** l'évidement (38b, 38c) et une extrémité supérieure (70a) de la nervure de rigidification (70) forment un moyen de détermination d'un angle de basculement du connecteur (8) vis-à-vis de l'adaptateur (9) lorsqu'un effort est appliqué sur le système d'essuyage selon l'axe vertical, c'est-à-dire un axe orthogonal à un axe longitudinal d'extension du balai d'essuyage et orthogonal à l'axe de fixation du connecteur sur l'adaptateur, et **en ce que** l'adaptateur (9) comprend au moins une languette latérale (23b, 23c) susceptible de basculer autour d'un axe de bascule (Ac) qui est perpendiculaire à un axe longitudinal (X) de l'adaptateur (9).

2. Ensemble (8, 9) selon la revendication précédente, dans lequel la paroi de fixation (34b, 34c) comprend deux évidements (38b, 38c) ménagés de part et d'autre de l'arbre de pivotement (Ad).

3. Ensemble (8, 9) selon la revendication 2, dans lequel les évidements (38b, 38c) bordent l'arbre de pivotement (Ad).

4. Ensemble (8, 9) selon l'une quelconque des revendications précédentes, dans lequel l'arbre de pivotement (Ad) est formé par au moins deux torons (35b, 35c) respectivement ménagés sur deux parois de fixation (34b, 34c).

5. Ensemble (8, 9) selon l'une quelconque des revendications précédentes, dans lequel l'adaptateur (9) comprend une tête (12) avec une paroi frontale (13) pourvue d'une échancrure frontale (14).

6. Ensemble (8, 9) selon l'une quelconque des revendications précédentes, dans lequel l'adaptateur (9) comprend un pied (18) qui est pourvu d'au moins une languette flexible (17) munie d'un plot (19).

7. Ensemble (8, 9) selon la revendication 6, dans lequel la languette flexible (17) est équipée d'au moins un contrefort (37b, 37c) qui s'étend entre la languette flexible (17) et le pied (18) de l'adaptateur (9).

8. Ensemble (8, 9) selon la revendication 7, dans lequel le contrefort (37b, 37c) présente une section longitudinale triangulaire.

9. Système d'essuyage (3) comprenant un ensemble (8, 9) tel que défini dans l'une quelconque des revendications précédentes, comprenant un balai d'essuyage (1) sur lequel est attaché le connecteur (8) et une extrémité terminale (50, 60) d'un bras d'entraînement (2) dans laquelle est rapporté l'adaptateur (9).

## Patentansprüche

1. Anordnung (8, 9), die von einem Verbindungsglied (8) und einem Adapter (9) zur Anordnung zwischen dem Verbindungsglied (8) und einem Endabschnitt (50, 60) eines Antriebsarms (2) eines Wischsystems (3) gebildet ist, der Adapter umfassend (9) ein erstes Befestigungselement (32), das geeignet ist, mit einem zweiten Befestigungselement (72) des Verbindungsglieds (8) zusammenzuwirken, das erste Befestigungselement (32) umfassend mindestens eine Befestigungswand (34b, 34c), die in einer Längsebene (P3) des Adapters (9) angeordnet ist, und die eine Schwenkwelle (Ad) des Verbindungsglieds (8) trägt, die Befestigungswand (34b, 34c) umfassend mindestens eine Ausnehmung (38b, 38c), die geeignet ist, eine Versteifungsrippe (70) des Verbindungsglieds (8) aufzunehmen, wobei die Ausnehmung (38b, 38c) einen Anschlag zur Aufnahme der Versteifungsrippe (70) bildet, wobei die Anordnung (8, 9) **dadurch gekennzeichnet ist, dass** die Ausnehmung (38b, 38c) und ein oberes Ende (70a) der Versteifungsrippe (70) ein Mittel zur Bestimmung eines Kippwinkels des Verbindungsglieds (8) gegenüber dem Adapter (9) bilden, wenn eine Beanspruchung auf das Wischsystem entlang der Vertikalachse, das heißt einer Achse, die orthogonal zu einer Längsverlängerungsachse des Wischerarms und orthogonal zur Befestigungsachse des Verbindungsglieds auf dem Adapter verläuft, angewandt wird, und dadurch, dass der Adapter (9) mindestens eine Seitenlasche (23b, 23c) umfasst, die geeignet ist, um eine Kippachse (Ac) zu kippen, die senkrecht zu einer Längsachse (X) des Adapters (9) verläuft.

2. Anordnung (8, 9) nach dem vorhergehenden Anspruch, wobei die Befestigungswand (34b, 34c) zwei Ausnehmungen (38b, 38c) umfasst, die beiderseits der Schwenkwelle (Ad) angeordnet sind.

3. Anordnung (8, 9) nach Anspruch 2, wobei die Ausnehmungen (38b, 38c) an die Schwenkwelle (Ad) angrenzen.

4. Anordnung (8, 9) nach einem der vorhergehenden Ansprüche, wobei die Schwenkwelle (Ad) von mindestens zwei Litzen (35b, 35c) gebildet ist, die jeweils auf zwei Befestigungswänden (34b, 34c) angeordnet sind.

5. Anordnung (8, 9) nach einem der vorhergehenden Ansprüche, wobei der Adapter (9) einen Kopf (12) mit einer Vorderwand (13) umfasst, die mit einer vorderen Aussparung (14) versehen ist.

6. Anordnung (8, 9) nach einem der vorhergehenden Ansprüche, wobei der Adapter (9) einen Fuß (18) umfasst, der mit mindestens einer flexiblen Lasche (17) versehen ist, die mit einem Block (19) versehen ist.

7. Anordnung (8, 9) nach Anspruch 6, wobei die flexible Lasche (17) mit mindestens einem Verstärkungselement (37b, 37c) ausgerüstet ist, das sich zwischen der flexiblen Lasche (17) und dem Fuß (18) des Adapters (9) erstreckt.

8. Anordnung (8, 9) nach Anspruch 7, wobei das Verstärkungselement (37b, 37c) einen dreieckigen Längsschnitt aufweist.

9. Wischsystem (3) umfassend eine Anordnung (8, 9) nach einem der vorhergehenden Ansprüche, umfassend einen Wischerarm (1), auf dem das Verbindungsglied (8) angebracht ist, und ein Abschlussende (50, 60) eines Antriebsarms (2), in welches der Adapter (9) eingebaut ist.

## Claims

1. Assembly (8, 9) formed by a connector (8) and an adapter (9) designed to be interposed between said connector (8) and an end portion (50, 60) of a drive arm (2), the adapter (9) including a first attachment member (32) designed to cooperate with a second attachment member (72) of the connector (8), the first attachment member (32) having at least one attachment wall (34b, 34c) arranged in a longitudinal plane (P₃) of the adapter (9) that bears a pivot shaft (Ad) of the connector (8), the attachment wall (34b, 34c) having at least one recess (38b, 38c) designed to receive a stiffening rib (70) of the connector (8), the recess (38b, 38c) forming a stop seat for the stiffening rib (70) of the connector (8), the assembly (8, 9) being **characterized in that** the recess (38b, 38c) and an upper end (70a) of the stiffening rib (70) form means for determining a tilt angle of the connector (8) in relation to the adapter (9) when a force is exerted along a vertical axis on the wiping system, i.e. an axis orthogonal to the longitudinal axis of the wiper blade and orthogonal to the fitting bolt between the connector and the adapter, and **in that** the adapter (9) includes at least one side tab (23b, 23c) that can tilt about a tilting axis (Ac) that is perpendicular to a longitudinal axis (X) of the adapter (9).

2. Adapter (9) according to the preceding claim, **characterized in that** the attachment wall (34b, 34c) has two recesses (38b, 38c) arranged on either side of the pivot shaft (Ad).

3. Adapter (9) according to Claim 2, **characterized in that** the recesses (38b, 38c) flank the pivot shaft (Ad).

4. Adapter (9) according to any one of the preceding claims, **characterized in that** the pivot shaft (Ad) is formed by at least two strands (35b, 35c) respectively arranged on two attachment walls (34b, 34c).

5. Adapter (9) according to any one of the preceding claims, **characterized in that** the adapter (9) includes a head (12) with a front wall (13) provided with a front notch (14).

6. Adapter (9) according to any one of the preceding claims, **characterized in that** the adapter (9) has a foot (18) that has at least one flexible tab (17) provided with a pad (19).

7. Adapter (9) according to Claim 6, **characterized in that** the flexible tab (17) is provided with at least one buttress (37b, 37c) extending between the flexible tab (17) and the foot (18) of the adapter (9).

8. Adapter (9) according to Claim 7, **characterized in that** the longitudinal section of the buttress (37b, 37c) is triangular.

9. Wiping system (3) including an assembly (8, 9) according to any one of the preceding claims, including a wiper blade (1) attached to the connector (8) and an end portion (50, 60) of a drive arm (2) to which the adapter (9) is affixed.
